# EUROPÄISCHE PATENTSCHRIFT

(11) **EP 2 233 219 B1**
(45) Veröffentlichungstag und Bekanntmachung des Hinweises auf die Patenterteilung: **16.10.2013**
(21) Anmeldenummer: 10153411.3
(22) Anmeldetag: 12.02.2010
(51) Int. Cl.: B21B 45/02, B08B 3/02, B21C 47/34, F26B 3/04

(54) **Verfahren und Vorrichtung zum Abblasen von Walzband mittels Luft oder gasförmiger Medien auf der Bandauslaufseite von Walzwerken zum Entfernen von an dem Walzband anhaftendem Walzöl oder anderen flüssigen Betriebsmedien**
Method and device for blowing on a rolled strip using air or gaseous media on the strip outlet side of rolling mill assemblies for removing oil or other liquid operating media stuck to the rolled strip
Procédé et dispositif d'évacuation de bande laminée à l'aide d'air ou de milieux gazeux sur le côté sortie de la bande de laminoirs pour retirer de l'huile de laminage adhérant sur la bande laminée ou d'autres milieux de fonctionnement liquides

(30) Priorität: 26.03.2009 DE 102009015206
(43) Veröffentlichungstag der Anmeldung: 29.09.2010
(73) Patentinhaber: Achenbach Buschhütten GmbH & Co. KG, 57223 Kreuztal (DE)
(72) Erfinder: Barten, Axel, 57078 Siegen (DE); Marx, Axel, 57223 Kreuztal (DE)
(74) Vertreter: advotec.

(56) Entgegenhaltungen:
- EP-B1- 1 827 724
- WO-A2-2008/028908
- JP-A- 6 304 613
- US-A- 5 702 537

## Beschreibung

Die Erfindung betrifft ein Verfahren zum Abblasen von Walzband mittels Luft oder gasförmiger Medien auf der Bandauslaufseite von Walzwerken, insbesondere Feinband- und Folienwalzwerken, zum Entfernen von an dem Walzband anhaftendem Walzöl oder anderen flüssigen Betriebsmedien.

Bei einem in der EP 1 827 724 B1 beschriebenen Verfahren zum Abblasen von an und auf einem Walzband haftendem Walzöl im Bandlauslauf wird auf der Oberseite und der Unterseite des Walzbandes mittels Überdruckdüsen ein Überdruckluftstrom aufgebaut, der entgegen der Bandlaufrichtung gerichtet ist. Durch den Überdruckluftstrom wird das noch an und auf dem Band befindliche Walzöl zu den oberen und unteren Bandkanten geleitet. Von dort gelangt das Walzöl in eine Absaugvorrichtung. Der Überdruckluftstrom wird in ein Saugsystem abgesaugt, und die geringe Menge des in dem Luftstrom enthaltenen Walzöls wird in nachfolgenden Filtervorrichtungen ausgefiltert.

Dieses bekannte Abblasverfahren hat folgende Nachteile:
Um das nach dem Abblasen des Walzbandes auf dessen Ober- und Unterseite noch anhaftende restliche Walzöl möglichst vollständig zu entfernten, muss das Bandmaterial einer Reinigungsbehandlung wie zum Beispiel einem Glühen in Glühöfen oder Entfetten in Entfettungsanlagen unterzogen werden. Diese Nachbehandlung des Walzbandes verursacht einen hohen kostenaufwendigen Energie- und Zeitaufwand und erfordert hohe Investitionskosten für die benötigten Bandbehandlungsanlagen. Durch die Glühbehandlung wird die Festigkeit insbesondere von Aluminiumfolienband derart verringert, dass eine Weiterverarbeitung des Bandes zum Beispiel in der pharmazeutischen Industrie nicht mehr möglich ist. Ohne Glühbehandlung verbleibt jedoch ein für viele Anwendungszwecke nachteiliger Restölfilm auf einer oder beiden Seiten des Bandmaterials, insbesondere eines Folienbandmaterials. Schließlich tritt beim Abblasen des noch warmen Walzbandes mittels Raumtemperatur aufweisender Druckluft nach dem Walzvorgang ein gewisser ungleichmäßiger "Abschreckeffekt" auf, der die Online-Bandplanheit ungünstig beeinflusst.

Die internationale Veröffentlichung WO 2008/028908 A2 beschreibt eine Vorrichtung zum Entfernen einer Flüssigkeit oder fester Partikel von ebenen metallischen Oberflächen, insbesondere von Walzbändern. Die Vorrichtung besteht aus einem sich über die Walzbandbreite erstreckenden Gehäuse, das einen Raum ausbildet, in dem röhrenförmige Zufuhrelemente und Absaugvorrichtungen angeordnet sind. Über ein Verteilerrohr als Zufuhrelement gelangt erwärmte Druckluft in das Gehäuse. Diese bildet einen ersten Gasstrom aus, der über eine aus zwei Blechen geformte, schlitzförmige Düse auf die Oberseite des Walzbandes geleitet wird. In Verbindung mit einem von außen angesaugtem zweiten Luftstrom sorgt die Vorrichtung für eine vollständige Entfernung von Ölemulsionen oder Staubpartikeln und bewirkt zugleich eine Trocknung des Walzbandes. Auf Grund des von außen angesaugten, nicht vorgewärmten Luftstroms ergibt sich auch hier ein "Abschreckungseffekt" zu Ungunsten der Bandplanheit.

Der Erfindung liegt die Aufgabe zugrunde, das gattungsgemäße Verfahren und die zugehörige Vorrichtung zum Abblasen von Walzband im Hinblick auf eine Erhöhung der Abblaswirkung zur Erzeugung eines Walzbandes zu verbessern, dessen Oberseite und Unterseite nahezu frei von restlichem Walzöl oder anderen flüssigen Betriebsmedien sind, wobei die nach dem Abblasen auf der Bandoberseite und/oder an der Bandunterseite verbleibende minimale Menge an Walzöl oder anderen flüssigen Betriebsmedien im Hinblick auf unterschiedliche Verwendungszwecke des Walzbandes regelbar sein soll.

Diese Aufgabe wird gelöst durch ein gattungsgemäßes Verfahren mit einer entsprechenden Vorrichtung zum Abblasen von Walzband, wobei das Abblasen des Walzbandes mittels erwärmter Druckluft oder erwärmter gasförmiger Druckmedien zur Aufnahme des vom Walzband entfernten Walzöls oder anderer flüssiger Betriebsmedien erfolgt und die dadurch gekennzeichnet sind, dass das Abblasen des Walzbandes auf der Bandauslaufseite eines Walzwerks mittels erwärmter Druckluft oder erwärmten gasförmigen Druckmedien in die Online-Bandplaneinheitsregelung eines Walzwerks einbezogen wird.

Das erfindungsgemäße Abblasverfahren und die zugehörige Abblasvorrichtung zeichnen sich durch folgende Vorteile aus:
Die erwärmte Druckluft beziehungsweise die erwärmten gasförmigen Druckmedien haben eine wesentlich höhere Aufnahmekapazität für das von dem Walzband abgeblasene Walzöl und andere von dem Band abgeblasene flüssige Betriebsmedien gegenüber bei den bekannten Abblasverfahren eingesetzter Druckluft beziehungsweise anderen gasförmigen Druckmedien mit Raumtemperatur, so dass sich das erfindungsgemäße Abblasverfahren gegenüber den bekannten Verfahren durch einen wesentlich höheren Wirkungsgrad auszeichnet, der eine Nachbehandlung des Walzbandes in Glühöfen oder Entfettungsanlagen überflüssig macht bzw. diese Prozesszeiten verkürzt.

Des Weiteren kann das Abblasen des Walzbandes auf der Bandauslaufseite mittels erwärmter Druckluft oder erwärmter gasförmiger Druckmedien in die Online-Bandplanheitsregelung des Walzwerkes einbezogen werden insofern, als der "Abschreckeffekt" von Druckluft oder gasförmigen Druckmedien mit Raumtemperatur beim Abblasen des Walzbandes im Bandauslauf vermieden wird.

Das Abblasen des Walzbandes kann an der Bandoberseite und/oder der Bandunterseite erfolgen mittels Hochdruckdüsen zur Erzeugung eines Luft- oder Gasstroms, die an eine Druckluft- oder Druckgasquelle angeschlossen sind, oder mittels Niederdruckdüsen, die zur Erzeugung eines Luft- oder Gasschleiers an ein Gebläse angeschlossen sind.

Das Abblasen des Walzbandes kann in Bandlaufrichtung und/oder gegen die Bandlaufrichtung durchgeführt werden.

Das neue Abblasverfahren arbeitet mit einer Mengen- und Temperaturregelung der Abblasluft oder des gasförmigen Abblasmediums für die Oberseite und/oder die Unterseite des Walzbandes.

Die Mengenreglung der Abblasluft oder des gasförmigen Abblasmediums erfolgt in Abhängigkeit von der

Bandgeschwindigkeit und/oder der Banddicke und/oder des Bandmaterials und/oder der Oberflächenrauhigkeit. Hierbei kann die Mengenregelung der Abblasluft oder des gasförmigen Abblasmediums für jede Blasdüse oder für mehrere in Zonen zusammengefasste Düsen durchgeführte werden.

Des Weitern besteht auch die Möglichkeit, eine Festeinstellung der Menge der Abblasluft oder des gasförmigen Abblasmediums vorzunehmen.

Die Regelung der Temperatur der über die Düsen an der Bandoberseite und/oder der Bandunterseite zugeführten Blasluft oder des gasförmigen Abblasmediums erfolgt ebenfalls in Abhängigkeit von der Bandgeschwindigkeit und/oder der Banddicke und/oder des Bandmaterials und/oder der Oberflächenrauhigkeit, wobei die Temperatur der Abblasluft oder des gasförmigen Abblasmediums unabhängig von der jeweiligen Stellgröße auf eine Temperatur unterhalb der Entzündungstemperatur des verwendeten Walzöls oder anderer verwendeter flüssiger Betriebsmedien eingeregelt wird.

Bei dem neuen Abblasverfahren besteht die Möglichkeit, eine unabhängige Regelung der Temperatur der über jede einzelne Düse der Bandoberseite oder der Bandunterseite zugeführten Abblasluft- oder Abblasgasmenge durchzuführen.

Ferner besteht die Möglichkeit, die Temperatur der über die Düsen an der Bandoberseite und/oder an der Bandunterseite zugeführten Abblasluft oder des gasförmigen Abblasmediums fest einzustellen.

Das Abblasverfahren sieht das Absaugen einer fest eingestellten und/oder regelbaren, mit Walzöl und anderen flüssigen Betriebsmedien beladenen Abblasluftmenge oder der Menge anderer gasförmiger Abblasmedien vor.

Das Absaugen der beziehungsweise des mit Walzöl oder anderen flüssigen Betriebsmedien beladenen Abblasluft beziehungsweise gasförmigen Mediums wird auf der Oberseite und/oder der Unterseite des Walzbandes durchgeführt, wobei die Absaugmenge der Abblasluft oder des gasförmigen Abblasmediums in Abhängigkeit von der Bandgeschwindigkeit und/oder der Banddicke und/oder des Bandmaterials und/oder der Oberflächenrauhigkeit erfolgt.

Das Walzöl oder andere flüssige Betriebsmedien werden mittels Luft- bzw. Gasfiltern aus der Abblasluft oder dem gasförmigen Abblasmedium ausgefiltert.

Durch die Regelung der Menge und der Temperatur der beziehungsweise des an der Unterseite und der Oberseite des Walzbandes zugeführten Abblasluft beziehungsweise gasförmigen Abblasmediums ist die Menge des auf der Oberseite und der Unterseite des zu einem Coil aufgewickelten Walzbandes als dünner Film verbleibenden restlichen Walzöls beziehungsweise eines anderen flüssigen Betriebsmediums entsprechend den Erfordernissen der weiteren Verarbeitung des Bandmaterials und der gewünschten Beschaffenheit der Ober- und Unterseite des Walzbandes beispielsweise hinsichtlich einer glänzenden oder matten optischen Wirkung bzw. für die Erfordernisse weiterer Veredelungsprozesse regelbar.

Nachfolgend ist eine mit erwärmter Luft betriebene Abblasvorrichtung für Walzband, die auf der Auslaufseite eines Walzwerkes angeordnet ist, anhand von Zeichnungsfiguren erläutert, die folgendes darstellen:

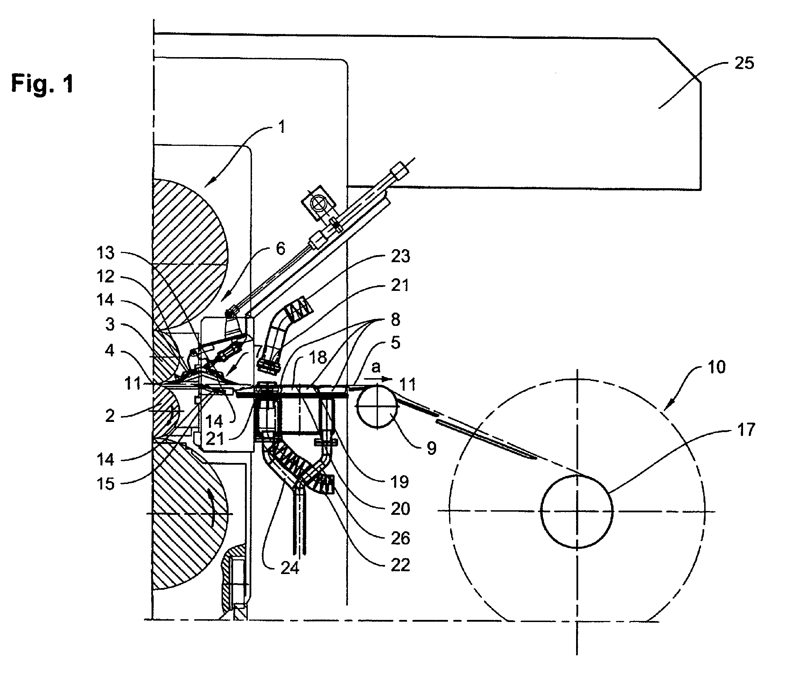

- Fig. 1: eine schematische Darstellung eines Walzwerkes mit einer auslaufseitig angeordneten Abblasvorrichtung und nachgeordneten Luftkissenförderern, die gleichzeitig zum Abblasen des Walzbandes und zum Transport des Bandanfangs zu einem Aufwickelhaspel genutzt werden,
- Fig. 2a und 2b: eine schematische Darstellung von zwei Anordnungsmöglichkeiten eines Düsenbalkens zum Zuführen von erwärmter Abluft zur Oberseite eines Walzbandes,
- Fig. 3: eine vergrößerte Querschnittsdarstellung eines Düsenbalkens mit einer in einer Abblastasche eingebauten Düse,
- Fig. 4: eine Schnittdarstellung des Düsenbalkens gemäß Linie IV-IV der Fig. 3 und
- Fig. 5: eine Schnittdarstellung einer Abblastasche im Luftkissenförderer.

Das aus dem Walzspalt 4 von zwei Arbeitswalzen 2, 3 eines Walzgerüstes 1 eines Feinband- und Folienwalzwerke austretende Walzband 5 durchläuft eine auf der Bandauslaufseite 6 des Walzgerüstes angeordnete Abblasvorrichtung 7 und wird über drei als Tische ausgebildete Luftkissenförderer 8 sowie eine Umlenkrolle 9 zu einem Aufwickelhaspel 10 geführt.

Die Abblasvorrichtung 7 ist mit zwei über der Bandlaufebene 11-11 angeordneten Düsenbalken 12, 13 mit Blasdüsen 14 zum Abblasen der Bandoberseite 5a sowie einem unter der Bandlaufebene 11-11 angeordneten Düsenbalken 15 mit Blasdüsen 14 zum Abblasen der Bandunterseite 5b mit erwärmter Druckluft ausgerüstet. Die Blasrichtungen der Blasdüsen 14 der beiden oberen Düsenbalken 12, 13 sind wahlweise entgegengesetzt entgegen und in Bandlaufrichtung a gerichtet und die Blasrichtung der Blasdüsen 14 des unteren Düsenbalkens 15 verläuft entgegen der Bandlaufrichtung a, wobei der untere Düsenbalken mit einem weiteren nicht dargestellten Düsenbalken kombiniert werden kann, dessen Düsen in Bandlaufrichtung blasen.

Die als Hochdruckdüsen betriebenen Blasdüsen 14 der oberen Düsenbalken 12, 13 und des unteren Düsenbalkens 15 sind an ein Druckluftsystem angeschlossen.

Die Erwärmung der Abblasluft kann durch die Abwärme aus dem Walzprozess oder anderen Anlagen und Maschinen erfolgen. Ferner besteht die Möglichkeit, die Abblasluft mittels Wärmetauschern zu erwärmen, die elektrisch, mit Gas oder flüssigen Medien betrieben werden.

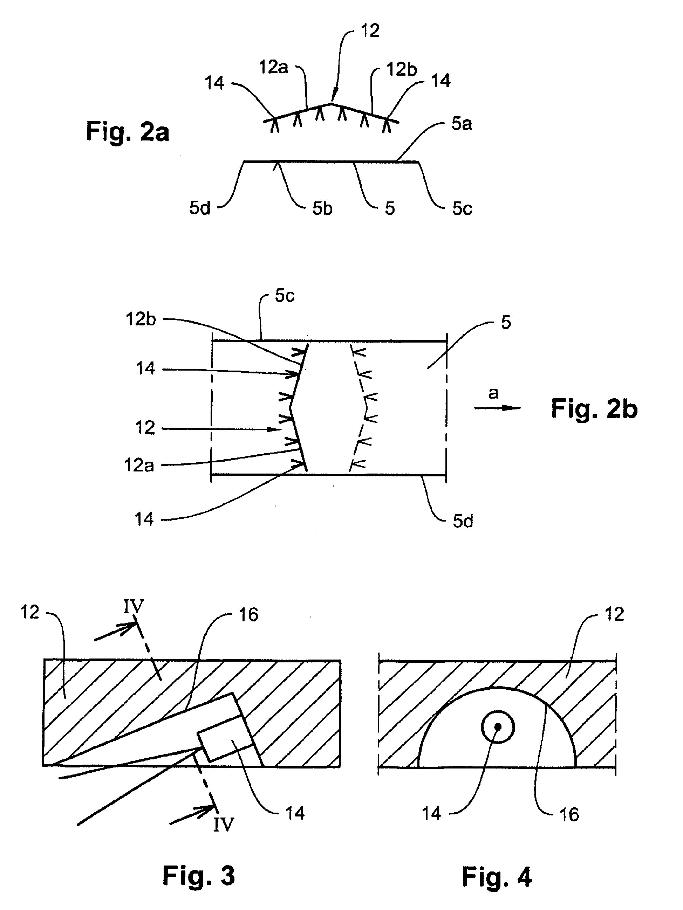

Der in den Figuren 2a und 2b dargestellte Düsenbalken 12 kann durch zwei symmetrisch und stumpfwinklig zueinander angeordnete Balkenelemente 12a, 12b gebildet werden.

Bei der Abblasvorrichtung 7 sind entsprechend der Darstellung des Düsenbalkens 12 in Figur 2a auch die beiden anderen Düsenbalken 13, 15 in einer quer zur Bandlaufrichtung a verlaufenden Vertikalebene über und unter der Bandlaufebene 11-11 angeordnet.

Ferner besteht die Möglichkeit, die Düsenbalken 12, 13, 15 gemäß Fig. 2b in einer parallel zur Bandlaufebene 11-11 gerichteten Horizontalebene mit einer Blasrichtung der Blasdüsen 14 in oder entgegen der Bandlaufrichtung a anzuordnen.

Für die beiden oberen und/oder unteren Düsenbalken 12, 13 der Abblasvorrichtung 7 ist eine vertikale und/oder horizontale Einstellbarkeit der Winkelstellung der Düsenbalken mit den Blasdüsen 14 zur Bandlaufebene 11-11 vorgesehen.

Die Figuren 3 und 4 zeigen den Einbau der Blasdüsen 14 in Abblastaschen 16 bei dem Düsenbalken 12, die in den Düsenbalken eingeformt, insbesondere eingefräst sind. Die Abblastaschen mit den Blasdüsen sind auch bei den Düsenbalken 13, 15 vorhanden.

Der Winkel zwischen den in Reihe nebeneinander angeordneten Abblastaschen 16 des zwei Balkenabschnitte 12a, 12b aufweisenden Düsenbalkens 12 nimmt vom inneren Ende zum äußeren Ende der Balkenelemente 12a, 12b im Bereich der Bandkanten 5c, 5d zur Optimierung der Abblaswirkung zu.

Bei einem zweiten nicht dargestellten, gerade ausgebildeten Düsenbalken der Abblasvorrichtung 7 nehmen die Winkel zwischen den Abblastaschen von der Balkenmitte zu den beiden Bandkanten nach außen zu.

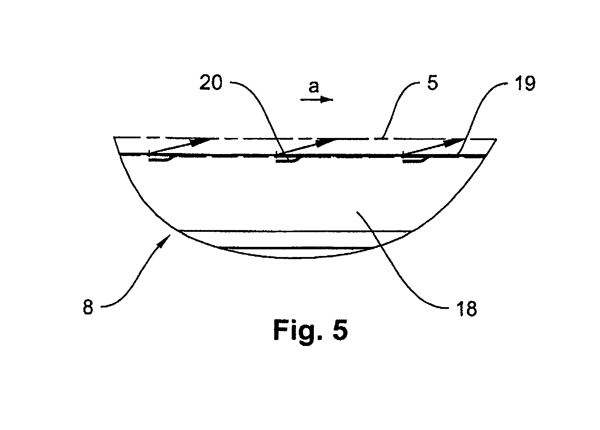

Vor Beginn des Walzbetriebs wird der aus dem Walzspalt 4 des Walzgerüstes 1 austretende Bandanfang des Walzbandes 5 mittels der Luftkissenförderer 8 zur Wickeltrommel 17 des Aufwickelhaspels 10 transportiert. Der Luftkissenförderer 8 besteht aus einem an Gebläse oder Ventilatoren über ein Zuleitungsrohr 24 angeschlossenen Blaskasten 18, in dessen Deckel 19 Blasöffnungen 20 in Reihenanordnung angebracht sind, die schräg unter einem spitzen Winkel von beispielsweise 15° zur Bandlaufrichtung a nach oben gerichtet sind (Figur 5). Durch die aus den Blasöffnungen 20 mit einem niedrigen Druck austretenden Luftstrahlen werden auf der Unterseite 5b des Walzbandes 5 Luftkissen mit einer vertikalen Hebeluftkomponente und einer horizontalen Förderluftkomponente zum Transport des Walzbandes 5 in Bandlaufrichtung a zum Aufwickelhaspel 10 erzeugt.

Bei Walzbetrieb werden die Luftkissenförderer 8 als Vorrichtungen zum Abblasen des an der Unterseite 5b des Walzbandes 5 anhaftenden Walzöls mittels der erwärmten Blasluft der Luftkissenförderer 8 eingesetzt.

Für den Betrieb der Luftkissenförderer als Abblasvorrichtungen besteht die Möglichkeit, eine Einstellbarkeit der Blasrichtung der Blasöffnungen 20 der Luftkissenförderer in und entgegen der Bandlaufrichtung a vorzusehen.

Die Abblasluft, die mit den vom Walzband 5 abgeblasenen Walzölrestmengen angereichert ist, wird durch nach dem Injektorprinzip arbeitende Saugdüsen 21 oberhalb und/oder unterhalb und/oder seitlich der Bandlaufebene 11-11, an die Düsen 21 angeschlossene Absaugrohre 22, 23 und eine Dunstabzugshaube 25, die über dem Walzwerksbereich zwischen Walzgerüst 1 und Aufwickelhaspel 10 angeordnet ist, in eine Filtervorrichtung abgesaugt, in der das von der erwärmten Abblasluft aufgenommene Walzöl ausgefiltert wird.

## Patentansprüche

1. Verfahren zum Abblasen von Walzband mittels Luft oder gasförmiger Medien auf der Bandauslaufseite von Walzwerken, insbesondere Feinband- und Folienwalzwerken, zum Entfernen von an dem Walzband anhaftendem Walzöl oder anderen flüssigen Betriebsmedien, wobei das Abblasen des Walzbandes mittels erwärmter Druckluft oder erwärmter gasförmiger Druckmedien zur Aufnahme des vom Walzband entfernten Walzöls oder anderer flüssiger Betriebsmedien erfolgt,
**dadurch gekennzeichnet,**
**dass** das Abblasen des Walzbandes auf der Bandauslaufseite eines Walzwerks mittels erwärmter Druckluft oder erwärmten gasförmigen Druckmedien in die Online-Bandplanheitsregelung eines Walzwerks einbezogen wird.

2. Verfahren nach Anspruch 1,
**gekennzeichnet durch**
das Abblasen der Bandoberseite und/oder der Bandunterseite.

3. Verfahren nach Anspruch 1 und 2,
**gekennzeichnet durch**
das Abblasen des Walzbandes mittels Hochdruck-Blasdüsen zur Erzeugung eines Luft- oder Gasstroms, die an eine Druckluft- oder Druckgasquelle angeschlossen sind, oder **durch** das Abblasen des Walzbandes mittels Niederdruck-Blasdüsen zur Erzeugung eines Luft- oder Gasschleiers, die an ein Luft- oder Gasgebläse angeschlossen sind.

4. Verfahren nach einem der Ansprüche 1 bis 3,
**gekennzeichnet durch**
das Abblasen des Walzbandes in Bandlaufrichtung und/oder gegen die Bandlaufrichtung.

5. Verfahren nach einem der Ansprüche 1 bis 4,
**gekennzeichnet durch**
eine Mengenregelung der Abblasluft oder des gasförmigen Abblasmediums für die Oberseite und/oder die Unterseite des Walzbandes.

6. Verfahren nach einem der Anspruche 1 bis 5,
**gekennzeichnet durch**
eine Mengenregelung der Abblasluft oder des gasförmigen Abblasmediums für jede Blasdüse.

7. Verfahren nach einem der Ansprüche 1 bis 6,
**gekennzeichnet durch**
eine Mengenregelung der Abblasluft oder des gasförmigen Abblasmediums für mehrere in Zonen zusammengefasste Blasdüsen.

8. Verfahren nach einem der Ansprüche 1 bis 7,
**gekennzeichnet durch**
eine Mengenregelung der Abblasluft oder des gasförmigen Abblasmediums in Abhängigkeit von der Bandgeschwindigkeit und/oder der Banddicke und/oder des Bandmaterials und/oder der Oberflächenrauhigkeit.

9. Verfahren nach einem der Ansprüche 1 bis 7,
**gekennzeichnet durch**
eine Festeinstellung der Menge der Abblasluft oder der Menge des gasförmigen Abblasmediums.

10. Verfahren nach einem der Ansprüche 1 bis 9,
**gekennzeichnet durch**
eine Regelung der Temperatur der über die Blasdüsen an der Bandoberseite und/oder der Bandunterseite zugeführten Abblasluft oder des gasförmigen Abblasmediums in Abhängigkeit von der Bandgeschwindigkeit und/oder der Banddicke und/oder des Bandmaterials und/oder der Oberflächenrauhigkeit, wobei die Temperatur der Abblasluft oder des gasförmigen Abblasmediums unabhängig von der jeweiligen Stellgröße auf eine Temperatur unterhalb der Entzündungstemperatur des verwendeten Walzöls oder anderer verwendeter flüssiger Betriebsmedien eingeregelt wird.

11. Verfahren nach einem der Ansprüche 1 bis 10,
**gekennzeichnet durch**
eine unabhängige Regelung der Temperatur der über jede einzelne Düse der Bandoberseite oder der Bandunterseite zugeführten Abblasluft- oder Abblasgasmenge.

12. Verfahren nach einem der Ansprüche 1 bis 9,
**gekennzeichnet durch**
eine Festeinstellung der Temperatur der über die Blasdüsen an der Bandoberseite und/oder an der Bandunterseite zugeführten Abblasluft oder des gasförmigen Abblasmediums.

13. Verfahren nach einem der Ansprüche 1 bis 12,
**gekennzeichnet durch**
das Absaugen einer fest eingestellten und/oder regelbaren, mit Walzöl oder anderen flüssigen Betriebsmedien beladenen Abluftmenge oder Menge anderer gasförmiger Abblasmedien.

14. Verfahren nach Anspruch 13,
**gekennzeichnet durch**
das Absaugen der beziehungsweise des mit Walzöl oder anderen flüssigen Betriebsmedien beladenen Abblasluft beziehungsweise gasförmigen Abblasmediums auf der Oberseite und/oder der Unterseite des Walzbandes.

15. Verfahren nach Anspruch 13 und 14,
**gekennzeichnet durch**
eine Regelung der Absaugmenge von mit Walzöl oder anderen flüssigen Betriebsmedien beladener Abblasluft oder mit Walzöl oder anderen Betriebsmedien beladenen gasförmigen Abblasmedien in Abhängigkeit von der Bandgeschwindigkeit und/oder der Banddicke und/oder des Bandmaterials und/oder der Oberflächenrauhigkeit.

16. Verfahren nach einem der Ansprüche 1 bis 15,
**gekennzeichnet durch**
das Entfernen des Walzöls oder anderer flüssiger Betriebsmedien aus der Abblasluft oder dem gasförmigen Ablassmedium mittels Luft- oder Gasfiltern.

17. Vorrichtung zum Abblasen von Walzband mittels erwärmter Druckluft oder erwärmter gasförmiger Druckmedien auf der Bandauslaufseite von Walzwerken gemäß dem Verfahren nach Anspruch 1,
**gekennzeichnet durch**
über und/oder unter der Bandlaufebene (11, 11) angeordnete Düsenbalken (12, 13, 15) mit als Hochdruck- oder Niederdruckdüsen betriebenen Blasdüsen (14) zum Abblasen des Walzbandes (5) und **durch** eine Einstellbarkeit des Winkels zwischen den in Reihe nebeneinander angeordneten Blasdüsen (14) der Düsenbalken (12, 13, 15).

18. Vorrichtung nach Anspruch 17,
**dadurch gekennzeichnet,**
**dass** die Düsenbalken (12) zwei symmetrisch und stumpfwinklig zueinander angeordnete Balkenelemente (12a, 12b) aufweisen.

19. Vorrichtung nach Anspruch 17 und 18,
**gekennzeichnet durch**
die Anordnung der Düsenbalken (11, 13, 15) in einer quer zur Bandlaufrichtung (a) verlaufenden Vertikalebene über und/oder unter der Bandlaufebene (11-11).

20. Vorrichtung nach Anspruch 17 und 18,
**gekennzeichnet durch**
eine Anordnung der Düsenbalken (12, 13, 15) in einer parallel zur Bandlaufebene (11-11) gerichteten Horizontalebene über und/oder unter der Bandlaufebene mit einer Blasrichtung der Blasdüsen (14) in oder entgegen der Bandlaufrichtung (a).

21. Vorrichtung nach einem der Ansprüche 17 bis 20,
**gekennzeichnet durch**
eine Einstellbarkeit der Winkelstellung der Düsenbalken (12, 13, 15) mit den Blasdüsen (14) zur Bandlaufebene (11-11).

22. Vorrichtung nach einem der Ansprüche 17 bis 21,
**gekennzeichnet durch**
den Einbau der Blasdüsen (14) in Abblastaschen (16), die in die Düsenbalken (12, 13, 15) eingeformt, insbesondere eingefräst sind.

23. Vorrichtung nach Anspruch 22,
**dadurch gekennzeichnet,**
**dass** die Winkel zwischen den in Reihe nebeneinander angeordneten Abblastaschen von der Mitte eines geraden Düsenbalkens zu den beiden Bandkanten zunehmen.

24. Vorrichtung nach Anspruch 22,
**dadurch gekennzeichnet,**
**dass** die Winkel zwischen den in Reihe nebeneinander angeordneten Abblastaschen (16) von zwei Balkenelemente (12a, 12b) aufweisen-5 den Düsenbalken (12) vom inneren zum äußeren Ende der Balkenelemente (12a, 12b) im Bereich der Bandkanten (5c, 5d) zunehmen.

## Claims

1. A method for blowing off rolled strip by means of air or gaseous media on the strip outlet side of rolling mills, in particular of thin strip and foil rolling mills, for removing rolling oil, which adheres to the rolled strip, or other liquid operating media, wherein blowing off the rolled strip is effected by means of heated compressed air or heated gaseous compressed media for receiving the rolling oil, which has been removed from the rolled strip, or other liquid operating media,
**characterised in that**
blowing off the rolled strip on the strip outlet side of a rolling mill by means of heated compressed air or heated gaseous compressed media is incorporated into the online strip surface flatness control of a rolling mill.

2. The method according to claim 1,
**characterised by**
blowing off the upper side of the strip and/or the lower side of the strip.

3. The method according to claim 1 and 2,
**characterised by**
blowing off the rolled strip by means of high-pressure blowing nozzles for generating an air or gas flow, which are connected to a source of compressed air or compressed gas, or by blowing off the rolled strip by means of low-pressure blowing nozzles for generating an air or gas curtain, which are connected to an air or gas blower.

4. The method according to one of the claims 1 to 3,
**characterised by**
blowing off the rolled strip in the direction of strip travel and/or against the direction of strip travel.

5. The method according to one of the claims 1 to 4,
**characterised by**
a volume control of the blow-off air or of the gaseous blow-off medium for the upper side and/or the lower side of the rolled strip.

6. The method according to one of the claims 1 to 5,
**characterised by**
a volume control of the blow-off air or of the gaseous blow-off medium for each blowing nozzle.

7. The method according to one of the claims 1 to 6,
**characterised by**
a volume control of the blow-off air or of the gaseous blow-off medium for multiple blowing nozzles which are grouped in zones.

8. The method according to one of the claims 1 to 7,
**characterised by**
a volume control of the blow-off air or of the gaseous blow-off medium as a function of the strip speed and/or of the strip thickness and/or of the strip material and/or of the surface roughness.

9. The method according to one of the claims 1 to 7,
**characterised by**
a fixed setting of the volume of the blow-off air or of the volume of the gaseous blow-off medium.

10. The method according to one of the claims 1 to 9,
**characterised by**
a control of the temperature of the blow-off air, which is fed via the blowing nozzles on the upper side of the strip and/or on the lower side of the strip, or of the gaseous blow-off medium as a function of the strip speed and/or of the strip thickness and/or of the strip material and/or of the surface roughness, wherein the temperature of the blow-off air or of the gaseous blow-off medium is adjusted to a temperature below the ignition temperature of the rolling oil used or of other liquid operating media used, independently from the respective actuating variable.

11. The method according to one of the claims 1 to 10,
**characterised by**
an independent control of the temperature of the blow-off air volume or blow-off gas volume which is fed via each individual nozzle of the upper side of the strip or of the lower side of the strip.

12. The method according to one of the claims 1 to 9,
**characterised by**
a fixed setting of the temperature of the blow-off air, which is fed via the blowing nozzles on the upper side of the strip and/or on the lower side of the strip, or of the gaseous blow-off medium.

13. The method according to one of the claims 1 to 12,
**characterised by**
suctioning off a fixedly set and/or controllable volume of exhaust air or volume of other gaseous blow-off media which is loaded with rolling oil or other liquid operating media.

14. The method according to claim 13,
**characterised by**
suctioning off the blow-off air or the gaseous blow-off medium which is loaded with rolling oil or other liquid operating media on the upper side and/or the lower side of the rolled strip.

15. The method according to claim 13 and 14,
**characterised by**
a control of the suction volume of blow-off air, which is loaded with rolling oil or other liquid operating media, or of gaseous blow-off media, which are loaded with rolling oil or other operating media, as a function of the strip speed and/or the strip thickness and/or the strip material and/or the surface roughness.

16. The method according to one of the claims 1 to 15,
**characterised by**
removing the rolling oil or other liquid operating media from the blow-off air or from the gaseous discharge medium by means of air or gas filters.

17. A device for blowing off rolled strip by means of heated compressed air or heated gaseous compressed media on the strip outlet side of rolling mills pursuant to the method according to claim 1,
**characterised by**
nozzle bars (12, 13, 15), which are disposed above and/or below the strip travel plane (11, 11), comprising blowing nozzles (14), which are operated as high-pressure or low-pressure nozzles, for blowing off the rolled strip (5), and by a possibility of setting the angle between the blowing nozzles (14) of the nozzle bars (12, 13, 15) which are disposed in series one next to the other.

18. The device according to claim 17,
**characterised in that**
the nozzle bars (12) have two bar elements (12a, 12b) which are disposed in a symmetrical manner and at an obtuse angle with respect to each other.

19. The device according to claim 17 and 18,
**characterised by**
the nozzle bars (11, 13, 15) being disposed in a vertical plane which runs transversely to the direction (a) of strip travel above and/or below the strip travel plane (11-11).

20. The device according to claim 17 and 18,
**characterised by**
the nozzle bars (12, 13, 15) being disposed in a horizontal plane which is oriented in a parallel manner with respect to the strip travel plane (11-11) above and/or below the strip travel plane, with a blowing direction of the blowing nozzles (14) in or against the direction (a) of strip travel.

21. The device according to one of the claims 17 to 20,
**characterised by**
a possibility of setting the angularity of the nozzle bars (12, 13, 15) with the blowing nozzles (14) with respect to the strip travel plane (11-11).

22. The device according to one of the claims 17 to 21,
**characterised by**
installing the blowing nozzles (14) in blow-off pockets (16), which are formed into the nozzle bars (12, 13, 15), in particular milled into the same.

23. The device according to claim 22,
**characterised in that**
the angles between the blow-off pockets, which are disposed in series one next to the other, increase from the centre of a straight nozzle bar toward the two strip edges.

24. The device according to claim 22,
**characterised in that**
the angles between the blow-off pockets (16), which are disposed in series one next to the other, of nozzle bars (12) having two bar elements (12a, 12b) increase from the inner end to the outer end of the bar elements (12a, 12b) in the area of the strip edges (5c, 5d).

## Revendications

1. Procédé de soufflage de bande laminée au moyen d'air ou des fluides gazeux du côté de sortie de la bande de laminoirs, notamment des laminoirs à bande mince et à feuille, pour enlever d'huile de laminage qui adhère à la bande laminée ou d'autres fluides de fonctionnement liquides, le soufflage de la bande laminée étant effectué au moyen d'air comprimé chauffé ou de fluides comprimés gazeux et chauffés pour recevoir l'huile de laminage qui a été enlevée de la bande de laminée ou d'autres fluides de fonctionnement liquides,
**caractérisé en ce que,**
le soufflage de la bande laminée du côté de sortie de la bande d'un laminoir au moyen d'air comprimé chauffé ou de fluides comprimés gazeux et chauffés est incorporé à la régulation en ligne de la planéité d'une bande d'un laminoir.

2. Procédé selon la revendication 1,
**caractérisé par**
le soufflage de la face supérieure de la bande et/ou de la face inférieure de la bande.

3. Procédé selon la revendication 1 et 2,
**caractérisé par**
le soufflage de la bande laminée au moyen des buses de soufflage à haute pression pour générer un écoulement d'air ou de gaz qui sont connectées à une source d'air comprimé ou de gaz comprimé, ou par le soufflage de la bande laminée au moyen des buses de soufflage à basse pression pour générer un rideau d'air ou de gaz qui sont connectées à un souffleur d'air ou de gaz.

4. Procédé selon l'une quelconque des revendications 1 à 3,
**caractérisé par**
le soufflage de la bande laminée dans la direction de passage de la bande et/ou contre la direction de passage de la bande.

5. Procédé selon l'une quelconque des revendications 1 à 4,
**caractérisé par**
une régulation du débit de l'air de soufflage ou du fluide de soufflage gazeux pour la face supérieure et/ou la face inférieure de la bande laminée.

6. Procédé selon l'une quelconque des revendications 1 à 5,
**caractérisé par**
une régulation du débit de l'air de soufflage ou du fluide de soufflage gazeux pour chaque buse de soufflage.

7. Procédé selon l'une quelconque des revendications 1 à 6,
**caractérisé par**
une régulation du débit de l'air de soufflage ou du fluide de soufflage gazeux pour plusieurs buses de soufflage qui sont groupées en zones.

8. Procédé selon l'une quelconque des revendications 1 à 7,
**caractérisé par**
une régulation du débit de l'air de soufflage ou du fluide de soufflage gazeux en fonction de la vitesse de la bande et/ou de l'épaisseur de la bande et/ou du matériau de la bande et/ou de la rugosité de la surface.

9. Procédé selon l'une quelconque des revendications 1 à 7,
**caractérisé par**
un réglage fixe du débit de l'air de soufflage ou du débit du fluide de soufflage gazeux.

10. Procédé selon l'une quelconque des revendications 1 à 9,
**caractérisé par**
une régulation de la température de l'air de soufflage qui est alimenté à travers les buses de soufflage sur la face supérieure de la bande et/ou sur la face inférieure de la bande ou du fluide de soufflage gazeux en fonction de la vitesse de la bande et/ou de l'épaisseur de la bande et/ou du matériau de la bande et/ou de la rugosité de la surface, la température de l'air de soufflage ou du fluide de soufflage gazeux étant régulée à une température au-dessous de la température d'inflammation de l'huile de laminage utilisée ou d'autres fluides de fonctionnement liquides utilisés, indépendamment de la variable réglante respective.

11. Procédé selon l'une quelconque des revendications 1 à 10,
**caractérisé par**
une régulation indépendante de la température du débit de l'air de soufflage ou du gaz de soufflage qui est alimenté à travers chaque buse individuelle de la face supérieure de la bande ou de la face inférieure de la bande.

12. Procédé selon l'une quelconque des revendications 1 à 9,
**caractérisé par**
un réglage fixe de la température de l'air de soufflage, qui est alimenté à travers les buses de soufflage sur la face supérieure de la bande et/ou sur la face inférieure de la bande, ou du fluide de soufflage gazeux.

13. Procédé selon l'une quelconque des revendications 1 à 12,
**caractérisé par**
l'aspiration d'un débit d'air sortant, qui est réglé fixement et/ou est réglable et qui est chargé d'huile de laminage ou d'autres fluides de fonctionnement liquides, ou d'un débit d'autres fluides de soufflage gazeux.

14. Procédé selon la revendication 13,
**caractérisé par**
l'aspiration de l'air de soufflage ou du fluide de soufflage gazeux qui est chargé d'huile de laminage ou d'autres fluides de fonctionnement liquides sur la face supérieure et/ou sur la face inférieure de la bande laminée.

15. Procédé selon la revendication 13 et 14,
**caractérisé par**
une régulation du débit d'aspiration d'air de soufflage, qui est chargé d'huile de laminage ou d'autres fluides de fonctionnement liquides, ou des fluides de soufflage gazeux, qui sont chargés d'huile de laminage ou d'autres fluides de fonctionnement, en fonction de la vitesse de la bande et/ou de l'épaisseur de la bande et/ou du matériau de la bande et/ou de la rugosité de la surface.

16. Procédé selon l'une quelconque des revendications 1 à 15,
**caractérisé par**
l'enlèvement de l'huile de laminage ou d'autres fluides de fonctionnement liquides de l'air de soufflage ou du fluide de purge gazeux au moyen de filtres d'air ou de gaz.

17. Dispositif de soufflage de bande laminée au moyen d'air comprimé chauffé ou de fluides comprimés gazeux et chauffés du côté de sortie de la bande de laminoirs selon le procédé de la revendication 1,
**caractérisé par**
des rampes (12, 13, 15) de buses qui sont disposées au-dessus et/ou au-dessous du plan (11, 11) de passage de la bande avec des buses de soufflage (14) qui sont opérées comme des buses à haute pression ou à basse pression pour le soufflage de la bande laminée (5), et par une possibilité de réglage de l'angle entre les buses (14) de soufflage, qui sont disposées en série côté à côté, des rampes (12, 13, 15) de buses.

18. Dispositif selon la revendication 17,
**caractérisé en ce que**
les rampes de buses (12) ont deux éléments (12a, 12b) de rampe qui sont disposés symétriquement en faisant un angle obtus entre eux.

19. Dispositif selon la revendication 17 et 18,
**caractérisé par**
les rampes (11, 13, 15) de buses étant disposées dans un plan vertical qui passe perpendiculairement au direction (a) de passage de la bande au-dessus et/ou au-dessous du plan (11-11) de passage de la bande.

20. Dispositif selon la revendication 17 et 18,
**caractérisé par**
les rampes (12, 13, 15) de buses étant disposées dans un plan horizontal qui s'oriente parallèlement par rapport au plan (11-11) de passage de la bande au-dessus et/ou au-dessous du plan de passage de la bande, avec une direction de soufflage des buses (14) de soufflage dans ou contre la direction (a) de passage de la bande.

21. Dispositif selon l'une quelconque des revendications 17 à 20,
**caractérisé par**
une possibilité de réglage de l'angularité des rampes (12, 13, 15) de buses avec les buses (14) de soufflage par rapport au plan (11-11) de passage de la bande.

22. Dispositif selon l'une quelconque des revendications 17 à 21,
**caractérisé par**
le montage des buses (14) de soufflage dans des poches (16) de soufflage qui sont formées dans les rampes (12, 13, 15) de buses, notamment fraisées.

23. Dispositif selon la revendication 22,
**caractérisé en ce que**
les angles entre les poches de soufflage qui sont disposées en série côté à côté grandissent à partir du centre d'une rampe de buses droite en direction des deux bords de la bande.

24. Dispositif selon la revendication 22,
**caractérisé en ce que**
les angles entre les poches (16) de soufflage, qui sont disposées en série côté à côté, de rampes (12) de buses, qui ont deux éléments (12a, 12b) de rampe, grandissent à partir de l'extrémité intérieure en direction de l'extrémité extérieure des éléments (12a, 12b) de rampe dans la région des bords (5c, 5d) de la bande.
